# EUROPÄISCHE PATENTSCHRIFT

(11) **EP 1 986 273 B1**
(45) Veröffentlichungstag und Bekanntmachung des Hinweises auf die Patenterteilung: **26.10.2011**
(21) Anmeldenummer: 08102948.0
(22) Anmeldetag: 27.03.2008
(51) Int. Cl.: H01R 4/64, H02G 13/00

(54) **Universelle Anschluss- und Verbindungseinrichtung zum Blitzschutz-Potentialausgleich für den Einsatz in explosionsgefährdeten Bereichen**
Universal connection and joining device for lightning prooved-potential equalisation for use in areas at risk of explosion
Dispositif de raccordement et de liaison universel destiné à l'équilibrage du potentiel pour la protection contre les effets de la foudre dans des zones présentant un risque d'explosion

(30) Priorität: 23.04.2007 DE 102007019084
(43) Veröffentlichungstag der Anmeldung: 29.10.2008
(73) Patentinhaber: DEHN + SÖHNE GMBH + CO KG, D-92318 Neumarkt (DE)
(72) Erfinder: Müller, Klaus-Peter, 92369 Sengenthal (DE); Wechsler, Andre, 91790 Bergen (DE); Pfister, Norbert, 92339 Beilngries (DE); Duscheck, Willibald, 92367 Pilsach (DE)
(74) Vertreter: Meissner, Bolte & Partner

(56) Entgegenhaltungen:
- DE-B4-102004 013 324
- FR-A1- 2 307 435
- GB-A- 2 377 557

## Beschreibung

Die Erfindung betrifft eine universelle Anschluss- und Verbindungseinrichtung zum Blitzschutz-Potentialausgleich für den Einsatz in explosionsgefährdeten Bereichen, umfassend mechanisch spann- und arretierbare Bänder, welche um den zu kontaktierenden Abschnitt eines Rohres, einer Stange oder dergleichen Einrichtung legbar sind, mindestens einen Kontaktkörper mit einem ersten Ende, das mit dem Rohr, der Stange oder dergleichen Einrichtung in Verbindung gelangt, sowie einem zweiten Ende zur Befestigung eines Leiters, und weiterhin umfassend ein Isolationsteil gemäß Oberbegriff des Patentanspruchs 1.

Aus der gattungsbildenden DE 10 2004 013 324 B4 ist eine Blitzschutz-Potentialausgleich-Anordnung mit einer Verbindungseinrichtung vorbekannt. Diese Einrichtung dient der Verbindung eines stromleitenden Bauteils, insbesondere eines Erdleiters, mit einem metallischen Bauteil, wobei die Verbindungseinrichtung einen mechanisch verlagerbaren, insbesondere verschraubbaren Kontakt aufweist, der gegen die Oberfläche des metallischen Bauteils zur Herstellung einer elektrisch leitenden Verbindung anpressbar ist. Als erfindungswesentlich wird gemäß der vorbekannten Lehre eine Dichteinrichtung herausgestellt, die im kontaktierten Zustand den Kontakt umgibt und an dem zu kontaktierenden Bauteil luftdicht anliegt. Diese Dichteinrichtung verhindert dabei, dass sich an im Bereich des Kontakt vorhandenen kleinen Öffnungen oder Spalten leicht entzündliche Gase oder Ablagerungen ansammeln, die bei Blitzeinwirkung andernfalls zur Sprühfunken-Bildung führen würden. Schmutzpartikel werden aufgrund der Dichteinrichtung von dem Kontakt, über den der Blitzstrom geleitet wird, sicher ferngehalten.

Gemäß einem Ausführungsbeispiel gemäß DE 10 2004 013 324 B4 ist es ebenfalls vorbekannt, ausgehend von einem U-förmigen Klemmteil dieses mittels Rohrschellen an dem rohrförmigen Bauteil zu befestigen. Die eigentliche elektrische Kontaktierung erfolgt hier ebenfalls mittels eines Kontaktes, der über eine Dichtmanschette luftdicht gegenüber dem Rohr abgeschlossen ist. Weiterhin ist ein isolierender Einsatz vorhanden, um eine elektrische Isolation des Gewindebolzens am Klemmteil gegenüber den Rohrschellen zu bewirken. Die elektrisch leitende Verbindung erfolgt bei dieser Ausführungsform ausschließlich über den eigentlichen Kontakt, der, wie erwähnt, zur Erhöhung der Zündsicherheit mittels Dichtmanschette abgedichtet ist.

Es hat sich gezeigt, dass eine dauerhafte, langzeitstabile Abdichtung mit technisch vertretbarem Aufwand nicht ohne weiteres möglich ist, so dass trotz des aus dem Stand der Technik bekannten Dichtmittels die Gefahr der Sprühfunken-Bildung nicht ausgeschlossen werden kann.

Aus dem Vorgenannten ist es daher Aufgabe der Erfindung, eine weiterentwickelte universelle Anschluss- und Verbindungseinrichtung zum Blitzschutz-Potentialausgleich für den Einsatz in explosionsgefährdeten Bereichen anzugeben, welche eine eindeutige funktionale Trennung bezogen auf die mechanische Befestigung einerseits und die elektrische Kontaktierung andererseits gewährleistet und wobei sichergestellt ist, dass unter allen Betriebsumständen der notwendige elektrische Kontaktdruck zwischen dem Kontaktkörper und der zu kontaktierenden Oberfläche z.B. eines Rohres gegeben ist.

Mit Hilfe an sich bekannter Rohrschellen soll die erfindungsgemäße Anschlussund Verbindungseinrichtung an Rohren, Stangen oder dergleichen Körpern unterschiedlicher Durchmesser befestigbar sein.

Erfindungsgemäß wird die Unterbindung jeglicher elektrischer Funkenentladung während des Blitzstoßes durch einen dauerhaften Anpressdruck und eine ausreichende Kontaktfläche mittels der speziellen Befestigungselemente im Zusammenwirken mit Federvorspannelementen erreicht.

Demgemäß erfolgt die Lösung der Aufgabe der Erfindung gemäß der Merkmalskombination nach Patentanspruch 1, wobei die Unteransprüche mindestens zweckmäßige Ausgestaltungen und Weiterbildungen darstellen.

Der erfindungsgemäße Kontaktkörper weist an seinem ersten Ende eine U-Form auf, wobei die seitlichen U-Schenkel jeweils eine nach außen gerichtete Abwinklung besitzen, welche dem Oberflächenverlauf des Rohres oder der Stange weitestgehend angenähert ist. Die Außenseiten bzw. die mit dem Rohr in Verbindung kommenden Abwinklungen können in einer Ausgestaltung der Erfindung Schneidkanten oder Schneidzacken besitzen.

Maßgeblich ist, dass die U-Schenkel mit den Abwinklungen des Kontaktkörpers eine relativ große Kontaktfläche bilden und über einen entsprechenden Längenabschnitt eine Kontaktierung zum Rohr oder zur Stange gewährleisten.

Weiterhin befindet sich der Kontaktkörper mit seinem ersten Ende in dem als allseits seitlich umschließenden, unten offenen Gehäuse ausgebildeten Isolationsteil, wobei mindestens die Abwinklungen des Kontaktkörpers über die offene Unterseite des Gehäuses hervorstehen.

Zwischen dem Kontaktkörper und der Innenunterseite des Gehäuses sind die bereits erwähnten Federvorspannelemente, z.B. in Form von Tellerfedern, eingesetzt, so dass bei fixiertem Spannband ein ausreichender Kontaktdruck zum Rohr oder zur Stange unter allen Betriebsumständen erhalten bleibt.

Das mindestens eine Spannband ist über einen Spannkopf geführt, wobei die Unterseite des Spannkopfes in mechanischer Pressverbindung mit der Oberseite des Gehäuses steht.

Das zweite Ende des Kontaktkörpers ist durch die Gehäuseoberseite des Isolationsteils hindurch geführt und steht dann zur Kontaktierung z.B. mit einem Erdleiter zur Verfügung.

Ausgestaltend weist der Kontaktkörper in seinem die seitlichen U-Schenkel verbindenden Abschnitt Bohrungen auf, welche Führungsbolzen für die Federvorspannelemente aufnehmen, wobei diese Führungsbolzen gleichzeitig das als Gehäuse ausgebildete Isolationsteil fixieren. Die Führungsbolzen können integraler Bestandteil des Isolationsgehäuses sein und z.B. durch einen Spritzvorgang ausgebildet werden.

Der Spannkopf besitzt eine im Wesentlichen U-Form, und zwar bezogen auf seinen Querschnitt, wobei die unteren Enden der U-Schenkel des Spannkopfes in nutenförmigen Ausnehmungen an der Außenoberseite des Gehäuses aufgenommen sind, so dass sich eine ausreichende und sichere Fixierung beider Bauteile, nämlich des Spannkopfes einerseits und des Gehäuses andererseits ergibt. Das als Isolationsteil ausgebildete Gehäuse weist an seiner Oberseite einen Querschlitz auf, durch welchen das zweite Ende des Kontaktkörpers geführt ist und nach oben austritt.

Der Kontaktkörper kann als metallisches Stanz-Biegeteil, bevorzugt einstückig gefertigt werden.

Der vorerwähnte Querschlitz ist bei einer weiteren Ausgestaltung der Erfindung nahe eines seitlichen Gehäuseendes befindlich, und zwar derart, dass zwei komplementäre Einrichtungen mit gegenüberliegenden zweiten Kontaktkörperenden an diesen Enden z.B. durch Verschrauben verbindbar sind. Es ist also auf diese Weise eine Aneinanderreihung von zwei erfindungsgemäßen Anschluss- und Verbindungseinrichtungen zur weiteren Erhöhung der Kontaktsicherheit möglich.

Der Kontaktkörper ist als Austausch- oder Einsatzstück bezogen auf das Gehäuse ausbildbar und besitzt entsprechend den jeweils vorliegenden Rohr- oder Stababmessungen, insbesondere dem Durchmesser oder dem Außenumfang folgend, verschiedene entsprechend geformte Abwinklungen. Es kann hierdurch nach Bedarf der entsprechende Kontaktkörper durch einen jeweils geeigneten ausgetauscht oder ersetzt werden.

Die Erfindung soll nachstehend anhand eines Ausführungsbeispiels sowie unter Zuhilfenahme von Figuren näher erläutert werden.

Hierbei zeigen:
- Fig. 1: eine Querschnittsdarstellung sowie eine perspektivische Seitenansicht der erfindungsgemäßen Anschluss- und Verbindungseinrichtung und
- Fig. 2: einen Längsschnitt durch eine derartige Einrichtung.

Dem Grundgedanken der Erfindung folgend, wird eine Funktionstrennung zwischen den Komponenten, die an der Ableitung des Blitzstoßstroms beteiligt sind, und den Komponenten vorgenommen, die der mechanischen Arretierung dienen. Hierdurch wird es möglich, jede Teilkomponente optimal auf die jeweilige Teilfunktion auszulegen.

Die in den Figuren dargestellte Einrichtung besteht aus einem Kontaktkörper aus leitfähigem Material, z.B. Kupfer. Das Profil des Kontaktkörpers ist so ausgeprägt, dass bei unterschiedlichen Rohrdurchmessern die Auflageflächen des Kontaktkörpers ausreichen, um einen guten metallischen und damit stoßstromtragfähigen Kontakt zwischen Kontaktkörper und dem Rohr zu gewährleisten.

Der Kontaktkörper wird mit Hilfe eines isolierenden Gehäuses, das z.B. aus Kunststoff besteht, elektrisch vom Befestigungselement, d.h. dem Spannkopf mit Spannband getrennt. Somit wird der Stoßstrom vollständig über den sehr gut leitenden Kontaktkörper auf das Rohr geführt und ein unkontrollierter Stromfluss über die mechanische Halterung und damit die Gefahr eines Sprühens verhindert.

Um einen dauerhaften Kontaktdruck zwischen Rohr und Schelle auch während des Blitzstromstoßes aufrechtzuerhalten, werden zwischen dem Kontaktkörper und dem Kunststoffgehäuse Federvorspannelemente, bevorzugt Tellerfedern eingesetzt.

Eine aufwendige Dichtungseinrichtung ist nicht notwendig. Bei der vorliegenden Ausführungsform wird die Unterbindung jeglicher elektrischer Funkenentladung während des Blitzstoßes durch einen dauerhaften Anpressdruck und eine ausreichende Kontaktfläche mittels der Befestigungselemente im Zusammenwirken mit den Federvorspannelementen erreicht.

Die erfindungsgemäße Einrichtung ist insbesondere für die Anwendung in explosionsgefährdeten Bereichen vorgesehen.

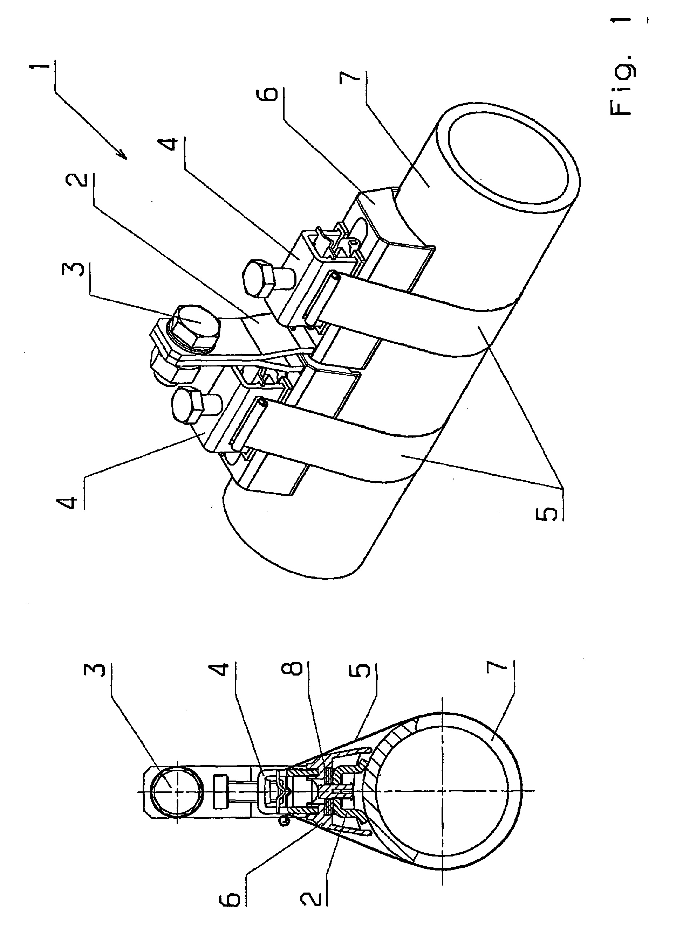

Wie in der Fig. 1 erkennbar, besteht die Anschluss- und Verbindungseinrichtung 1 aus einem Kontaktkörper 2, einer Befestigung 3 für den Erdleiter, aus zwei Spannköpfen 4, jeweils zugeordneten Spannbändern 5, einem Isolierstoffgehäuse 6 sowie Federvorspannelementen, bevorzugt Tellerfedern 8.

Die erfindungsgemäße Anschluss- und Verbindungseinrichtung 1 ist an einem Rohr 7 durch die Spannbänder 5 unter Wirkung des Spannkopfes 4 und dort vorgesehener Spannschrauben gehalten.

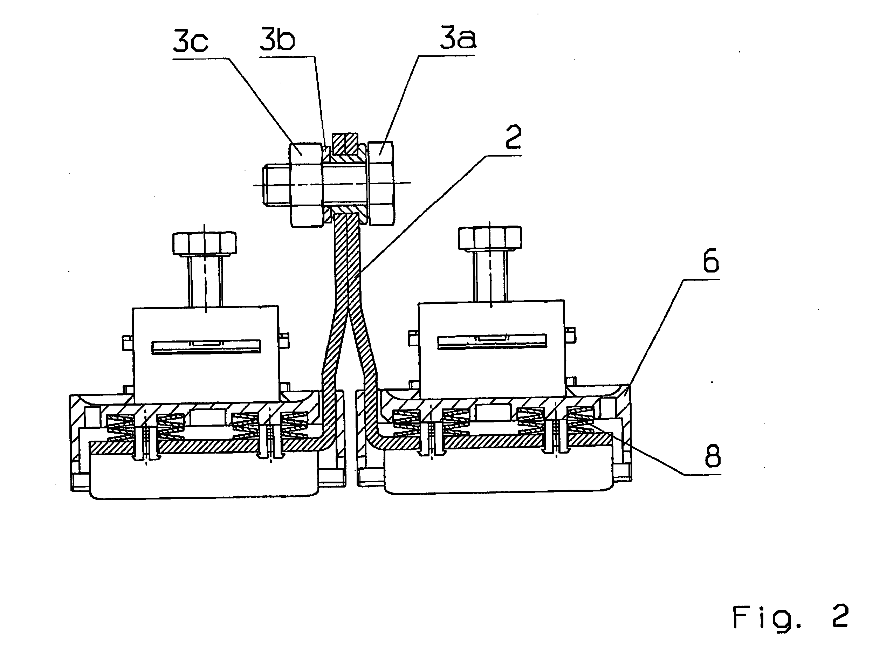

Die Befestigung für den Leiter kann nach Fig. 2 eine Befestigungsschraube 3a mit Befestigungsmutter 3c sowie entsprechenden Sicherungsmitteln, z.B. in Form eines Federrings 3b umfassen.

Der Kontaktkörper 2 weist an seinem ersten Ende eine im Wesentlichen U-Form auf, wobei die seitlichen U-Schenkel jeweils eine Abwinklung besitzen, welche dem Oberflächenverlauf des Rohres 7 angenähert sind.

Der Kontaktkörper 2 befindet sich mit seinem ersten Ende in dem als seitlich umschließendes Gehäuse 6 ausgebildeten Isolationsteil, wobei mindestens die Abwinklungen des Kontaktkörpers 2 über die offene Unterseite des Gehäuses 6 hervorstehen.

Die Tellerfedern 8 als Vorspannelemente bewirken, dass bei fixiertem Spannband 5 ein ausreichender Kontaktdruck zum Rohr 7 unter allen Betriebsumständen und auch bei Stoßstrombelastung erhalten bleibt.

Das zweite Ende des Kontaktkörpers 2 ist durch die Gehäuseoberseite des Isolationsteils geführt, wobei hierfür ein entsprechender Querschlitz im Gehäuse 6 vorgesehen ist.

Im Kontaktkörper 2 sind in seinem, die seitlichen U-Schenkel verbindenden Abschnitt Bohrungen befindlich, welche Führungsbolzen für die Tellerfedern 8 aufnehmen.
Diese Führungsbolzen können gleichzeitig auch das Gehäuse 6 aus Isolierstoff fixieren.

Der Spannkopf 4 besitzt einen Querschnitt in im Wesentlichen U-Form, wobei die unteren Enden der U-Schenkel des Spannkopfes 4 in nutenförmigen Ausnehmungen an der Oberseite des Gehäuses 6 aufgenommen sind.

Wie insbesondere aus der Fig. 1, rechte Abbildung, sowie der Schnittdarstellung nach Fig. 2 ersichtlich, ist der Querschlitz nahe eines seitlichen Gehäuseendes befindlich, und zwar derart, dass zwei komplementäre erfindungsgemäße Einrichtungen mit gegenüberliegenden zweiten Kontaktkörperenden an diesen Enden verbindbar und aneinander reihbar sind.

Die Fig. 2 macht weiterhin deutlich, dass jeder Kontaktkörper 2 über zwei benachbart angeordnete Tellerfedern 8 verfügt, um über die gesamte Länge des Kontaktkörpers bezogen auf das zu kontaktierende Rohr 7 einen ausreichenden Anpress- und damit Kontaktdruck zu bewirken.

Mit Hilfe der vorgestellten Ausführungsform der Erfindung gelingt eine Vermeidung von direkter Funkenentladung durch Aufrechterhaltung des Kontaktdrucks mittels spezieller Federn und einer gegenüber dem Stand der Technik weitergebildeten Befestigungseinheit. Der Kontaktkörper besitzt eine solche Form, dass jeweils eine ausreichende Kontaktfläche auch bei unterschiedlichen Rohrdurchmessern gewährleistet ist.

### Bezugszeichenliste

- 1: universelle Anschluss- und Verbindungseinrichtung
- 2: Kontaktkörper
- 3: Befestigung für Leiter
- 3a: Befestigungsschraube
- 3b: Federring
- 3c: Befestigungsmutter
- 4: Spannkopf
- 5: Spannband
- 6: Gehäuse aus Isolierstoff
- 7: Rohr
- 8: Tellerfeder

## Patentansprüche

1. Universelle Anschluss- und Verbindungseinrichtung (1) zum Blitzschutz-Potentialausgleich für den Einsatz in explosionsgefährdeten Bereichen, umfassend mechanisch spann- und arretierbare Bänder (5), welche um den zu kontaktierenden Abschnitt eines Rohres (7), einer Stange oder dergleichen Einrichtung legbar sind, mindestens einen Kontaktkörper (2) mit einem ersten Ende, das mit dem Rohr (7), der Stange oder dergleichen Einrichtung in Verbindung gelangt, sowie einem zweiten Ende zur Befestigung (3) eines Leiters, und weiterhin umfassend ein Isolationsteil (6),
**dadurch gekennzeichnet, dass**
der Kontaktkörper (2) an seinem ersten Ende eine U-Form aufweist, wobei die seitlichen U-Schenkel jeweils eine Abwinklung besitzen, welche dem Oberflächenverlauf des Rohres (7) oder der Stange angenähert sind,
sich der Kontaktkörper (2) mit seinem ersten Ende in dem als seitlich umschließenden Gehäuse (6) ausgebildeten Isolationsteil befindet, wobei mindestens die Abwinklungen des Kontaktkörpers (2) über die offene Unterseite des Gehäuses (6) hervorstehen,
weiterhin zwischen dem Kontaktkörper (2) und der Innenunterseite des Gehäuses (6) Federvorspannelemente (8) eingesetzt sind, so dass bei fixiertem Spannband (5) ein ausreichender Kontaktdruck zum Rohr (7) oder zur Stange unter allen Betriebsumständen erhalten bleibt,
das mindestens eine Spannband (5) über jeweils einen Spannkopf (4) geführt ist, wobei die Unterseite des Spannkopfes (4) in mechanischer Pressverbindung mit der Oberseite des Gehäuses (6) steht und das zweite Ende des Kontaktkörpers (2) durch die Gehäuseoberseite des Isolationsteils geführt ist.

2. Einrichtung nach Anspruch 1,
**dadurch gekennzeichnet, dass**
der Kontaktkörper (2) in seinem die seitlichen U-Schenkel verbindenden Abschnitt Bohrungen aufweist, welche Führungsbolzen für die Federvorspannelemente (8) aufnehmen, wobei die Führungsbolzen gleichzeitig das als Gehäuse (6) ausgebildete Isolationsteil fixieren.

3. Einrichtung nach Anspruch 1 oder 2,
**dadurch gekennzeichnet, dass**
die Federvorspannelemente als Tellerfedern (8) ausgebildet sind.

4. Einrichtung nach einem der vorangegangenen Ansprüche,
**dadurch gekennzeichnet, dass**
der Spannkopf (4) eine im Querschnitt U-Form besitzt, wobei die unteren Enden der U-Schenkel des Spannkopfes (4) in nutenförmigen Ausnehmungen an der Oberseite des Gehäuses (6) aufgenommen sind.

5. Einrichtung nach einem der vorangegangenen Ansprüche,
**dadurch gekennzeichnet, dass**
das als Isolationsteil ausgebildete Gehäuse (6) an seiner Oberseite einen Querschlitz aufweist, durch welchen das zweite Ende des Kontaktkörpers (2) geführt ist und nach oben austritt.

6. Einrichtung nach Anspruch 5,
**dadurch gekennzeichnet, dass**
der Querschlitz nahe des Gehäuseendes befindlich ist, derart, dass zwei komplementäre Einrichtungen mit gegenüberliegenden zweiten Kontaktkörperenden an diesen Enden verbindbar sind.

7. Einrichtung nach einem der vorangegangenen Ansprüche,
**dadurch gekennzeichnet, dass**
der Kontaktkörper (2) als Austausch- oder Einsatzstück bezogen auf das Gehäuse (6) ausgebildet ist und entsprechend den jeweils vorliegenden Rohr- oder Stangenabmessungen verschieden geformte Abwinklungen oder Abmessungen besitzt.

8. Einrichtung nach einem der vorangegangenen Ansprüche,
**dadurch gekennzeichnet, dass**
je Kontaktkörper (2) zwei benachbart angeordnete Federvorspannelemente (8) vorgesehen sind.

## Claims

1. Universal connection and joining device (1) for the lightning protection potential equalization for use in explosion-hazardous areas, comprising mechanically tensible and lockable straps (5) which can be laid around the section of a pipe (7), a rod or similar device to be contacted, at least one contact body (2) having a first end that is connected to the pipe (7), rod or similar device, and a second end for fixing (3) a conductor, and further comprising an insulation part (6),
**characterized in that**
the contact body (2) is U-shaped at its first end, wherein the lateral U-legs each have a bending that are approximated to the surface contour of the pipe (7) or the rod,
the contact body (2) is located with its first end in the insulation part which is designed as a laterally enclosing housing (6), wherein at least the bendings of the contact body (2) project over the open underside of the housing (6),
moreover spring preload elements (8) are inserted between the contact body (2) and the inner underside of the housing (6) so that, if the tensioning strap (5) is fixed, a sufficient contact pressure to the pipe (7) or the rod is maintained in all operating circumstances,
the at least one tensioning strap (5) is passed over a clamping head (4), wherein the underside of the clamping head (4) is connected to the upper side of the housing (6) under mechanical pressure and the second end of the contact body (2) is passed through the upper side of the housing of the insulation part.

2. Device according to claim 1,
**characterized in that**
the contact body (2) includes bores in its section connecting the lateral U-legs, said bores receiving guide pins for the spring preload elements (8), wherein the guide pins simultaneously fix the insulation part designed as housing (6) in position.

3. Device according to claim 1 or 2,
**characterized in that**
the spring preload elements are designed as disc springs (8).

4. Device according to one of the preceding claims,
**characterized in that**
the clamping head (4) is U-shaped in cross-section, wherein the lower ends of the U-legs of the clamping head (4) are received in groove-shaped recesses on the upper side of the housing (6).

5. Device according to one of the preceding claims,
**characterized in that**
the housing (6) designed as insulation part includes a transverse slot on its upper side through which the second end of the contact body (2) is passed and emerges upwardly.

6. Device according to claim 5,
**characterized in that**
the transverse slot is located near the end of the housing in such a way that two complementary devices with opposing second contact body ends are connectable at these ends.

7. Device according to one of the preceding claims,
**characterized in that**
the contact body (2) is designed as an exchange piece or insert relative to the housing (6) and has differently shaped bendings or dimensions in correspondence with the respectively prevailing pipe or rod dimensions.

8. Device according to one of the preceding claims,
**characterized in that**
two adjacently arranged spring preload elements (8) are provided per contact body (2).

## Revendications

1. Dispositif de connexion et de liaison universel (1) pour l'équilibrage du potentiel en protection antifoudre, destiné à l'utilisation dans des zones menacées par les explosions, comprenant des bandes (5) susceptibles d'être tendues et arrêtées par voie mécanique, qui peuvent être posées autour du tronçon à mettre en contact d'un tube (7), d'une barre ou d'un organe similaire, comprenant au moins un corps de contact (2) avec une première extrémité qui parvient en liaison avec le tube (7), la barre ou l'organe similaire, et avec une seconde extrémité pour la fixation (3) d'un conducteur, et comprenant en outre une partie d'isolation (6),
**caractérisé en ce que**
le corps de contact (2) présente à sa première extrémité une forme en U, dans laquelle les bras latéraux du U possèdent chacun un coudage, lesquels se rapprochent du tracé de surface du tube (7) ou de la barre,
le corps de contact (2) se trouve avec sa première extrémité dans la partie d'isolation, réalisée sous forme d'un boîtier (6) qui l'entoure latéralement, les coudages du corps de contact (2) dépassant au moins au-delà de la face inférieure ouverte du boîtier (6),
il est en outre prévu des éléments de précontrainte à ressort (8) mis en place entre le corps de contact (2) et la face inférieure intérieure du boîtier (6), de sorte que lorsque la bande de serrage (5) est fixée, une pression de contact suffisante vis-à-vis du tube (7) ou de la barre reste conservée dans toutes les situations de fonctionnement,
ladite au moins une bande de serrage (5) est guidée via une tête de serrage (4) respective, de sorte que la face inférieure de la tête de serrage (4) se trouve un en liaison de pressage mécanique avec la face supérieure du boîtier (6) et la seconde extrémité du corps de contact (4) est guidée à travers la face supérieure du boîtier de la partie d'isolation.

2. Dispositif selon la revendication 1,
**caractérisé en ce que** le corps de contact (2) comporte, dans son tronçon qui relie les branches latérales du U, des perçages qui reçoivent des goujons de guidage pour les éléments de précontrainte à ressort (8), lesdits goujons de guidage fixant simultanément la partie d'isolation réalisée sous forme de boîtier (6).

3. Dispositif selon la revendication 1 ou 2,
**caractérisé en ce que** les éléments de précontrainte à ressort sont réalisés sous forme de rondelles-ressorts (8).

4. Dispositif selon l'une des revendications précédentes,
**caractérisé en ce que** la tête de serrage (4) possède en section transversale une forme en U, dans laquelle les extrémités inférieures des branches du U de la tête de serrage (4) sont reçues dans des logements en forme de gorges à la face supérieure du boîtier (6).

5. Dispositif selon l'une des revendications précédentes,
**caractérisé en ce que** le boîtier (6) réalisé sous forme de partie d'isolation présente à sa face supérieure une fente transversale à travers laquelle la seconde extrémité du corps de contact (2) est guidée et sort vers le haut.

6. Dispositif selon la revendication 5,
**caractérisé en ce que** la fente transversale se trouve à proximité de l'extrémité du boîtier, de telle façon que deux dispositifs complémentaires sont susceptibles d'être reliés à ces extrémités avec des secondes extrémités opposées de corps de contact.

7. Dispositif selon l'une des revendications précédentes, **caractérisé en ce que** le corps de contact (2) est réalisé sous forme de pièce interchangeable ou de pièce en insert par rapport au boîtier (6), et possède des coudages de formes différentes ou des dimensions différentes en correspondance des dimensions du tube ou de la barre respectivement en présence.

8. Dispositif selon l'une des revendications précédentes, **caractérisé en ce qu'**il est prévu deux éléments de précontrainte à ressort (8) agencés au voisinage pour chaque corps de contact (2).
